# EUROPÄISCHE PATENTANMELDUNG

(11) **EP 4 674 765 A1**
(43) Veröffentlichungstag der Anmeldung: **07.01.2026**
(21) Anmeldenummer: 25186139.9
(22) Anmeldetag: 30.06.2025
(51) Int. Cl.: B64F 1/32, B65G 13/00, B65G 13/11

(54) **VORRICHTUNG ZUM BEREITSTELLEN VON EINER BARRIERE, VERWENDUNG UND ROLLENDECK**

(30) Priorität: 05.07.2024 DE 102024119235
(71) Anmelder: Deutsche Post AG, 53113 Bonn (DE)
(72) Erfinder: Meiner, Hendrik, 04356 Leipzig (DE); Naumann, Marc, 04159 Leipzig (DE)
(74) Vertreter: Michalski Hüttermann & Partner Patentanwälte mbB

(57) **Zusammenfassung**

Die Erfindung betrifft eine Vorrichtung (1) zum Bereitstellen einer Barriere für auf einem Rollendeck (100) aufliegende Objekte (200), wobei das Rollendeck (100) eine mit Öffnungen (104) versehene Ladefläche (102) aufweist, wobei aus den Öffnungen (104) Rollenelemente (106) zur Auflage von den Objekten (200) hervorstehen, und wobei die Rollenelemente (106) jeweils um eine Hochachse (108) und um eine Horizontalachse (110) drehbar angeordnet sind, die Vorrichtung (1) aufweisend
zumindest zwei Sicherungseinrichtungen (10), die jeweils einen Einsteckabschnitt (20) zum Einstecken in eine der Öffnungen (104) des Rollendecks (100) und einen Auflageabschnitt (26) zur Auflage auf einen die Öffnung (104) umgebenden Bereich der Ladefläche (102) aufweisen, und
eine Verbindungseinrichtung (50) zum Bereitstellen einer mechanischen Verbindung zwischen zwei Sicherungseinrichtungen (10) der zumindest zwei Sicherungseinrichtungen (10).

## Beschreibung

Die Erfindung betrifft eine Vorrichtung zum Bereitstellen einer Barriere für auf einem Rollendeck aufliegende Objekte.

Rollendecks, auch Castordeck genannt, sind aus der Praxis bekannt. Ein Rollendeck weist eine Ladefläche mit Rollenelementen zur Auflage von Objekten auf. Die Rollenelemente sind jeweils drehbar. Auf dem Rollendeck können Objekte, beispielsweise Container mit einer meist flachen Unterseite verschoben werden, wobei die Rollenelemente eine möglichst reibungsarme Bewegung des Objekts längs der Ladefläche ermöglichen. Es herrscht Bedarf, unter Berücksichtigung von Arbeitsschutz und Ergonomie die Objekte auf dem Rollendeck praktikabel zu fixieren, beispielsweise eine Barriere hierfür anzugeben.

DE 602 26 198 T2 beschreibt eine schwenkbare Laufrolle für ein Transportsystem, welches eine obere Plattform umfasst und bei dem die Laufrolle ein Rad, das an einer Radwelle mittels eines ersten Wälzlagers befestigt ist, umfasst.

CN 1 12 550 112 A beschreibt einen Frachtboden und einen Frachtwaggon.

DE 10 2017 202 260 A1 eine Vorrichtung zum Sichern von Ladegut auf einer Ladefläche eines Fahrzeugs, insbesondere Kraftfahrzeugs.

Davon ausgehend ist es die Aufgabe der Erfindung, Lösungen bereitzustellen, mit denen das Fixieren von Objekten auf Rollendecks besser gelingt. Insbesondere sollen die aus dem Stand der Technik bekannten Lösungen verbessert oder Alternativlösungen geschaffen werden. Insbesondere sollen Nachteile bei aus dem Stand der Technik bekannten Lösungen vermieden oder aber zumindest im Wesentlichen reduziert werden.

Diese Aufgabe wird durch den Gegenstand der unabhängigen Patentansprüche gelöst. Insbesondere wird die Erfindung in den unabhängigen Patentansprüchen definiert. Bevorzugte Weiterbildungen der Erfindung finden sich in den Unteransprüchen, in den Figuren und in der nachfolgenden Beschreibung.

Vorgeschlagen wird eine Vorrichtung zum Bereitstellen von einer Barriere für auf einem Rollendeck aufliegende Objekte. Das insbesondere zur Vorrichtung passende Rollendeck weist eine mit Öffnungen versehene Ladefläche auf. Aus den Öffnungen stehen Rollenelemente zur Auflage von den Objekten hervor. Die Rollenelemente sind jeweils um eine Hochachse und um eine Horizontalachse drehbar bzw. rotierbar angeordnet. Vorgeschlagen wird, dass die Vorrichtung folgendes aufweist:
zumindest zwei Sicherungseinrichtungen, die jeweils einen Einsteckabschnitt zum Einstecken in eine der Öffnungen des Rollendecks und einen Auflageabschnitt zur Auflage auf einen die Öffnung umgebenden Bereich der Ladefläche aufweisen, und
eine Verbindungseinrichtung zum Bereitstellen einer mechanischen Verbindung zwischen zwei Sicherungseinrichtungen der zumindest zwei Sicherungseinrichtungen.

Anders gesagt, beispielsweise, wird ein Blockiergerät für ein mit Rollen versehenes Castordeck vorgeschlagen, das zwei Blockierelemente und ein Verbindungselement aufweist. Die Blockierelemente sind zum Einstecken in Öffnungen für die Rollen des Castordecks eingerichtet, wobei das Verbindungselement die Blockierelemente verbindet.

Die Erfindung setzt die Idee um, die mit Rollenelementen versehenen Öffnungen bei einem Rollendeck zu verwenden, um dort eine Barriere bereitzustellen. Die Öffnungen bieten regelmäßig neben den Rollenelementen ausreichend Eingriffsmöglichkeit zum Einstecken des Einsteckabschnitts, beispielsweise in Form eines Vorsprungs, um einerseits das Rollenelement außer Funktion zu setzen und andererseits durch Formschluss längs der Ladefläche eine physikalische Blockade zu schaffen. In der unmittelbaren Umgebung der Öffnungen kann sich der Auflageabschnitt gut abstützen.

Das Rollendeck kann auch als Casterdeck oder Castordeck bezeichnet werden. Hierbei handelt es sich um eine aus dem Stand der Technik bekannte Vorrichtung, um Objekte vereinfacht verschieben zu können. Die Objekte können auf dem Rollendeck aufliegen.

Bei den Objekten handelt es sich regelmäßig um Transportbehälter, insbesondere aufweisend eine flache Unterseite. Beispielsweise kann es sich bei den Objekten um Paletten, Kartons ULD-Containern oder ähnlichen Gegenständen zum Verpacken und/oder Transportieren handeln. "ULD" steht für "Unit Load Device". Die Objekte können frei von unterseitigen Rollen bzw. Rollenelementen ausgebildet sein.

Die Vorrichtung kann eine Barriere für auf einem Rollendeck aufliegende Objekte bereitstellen. Die Barriere kann als Blockade oder Anschlag für die Objekte verstanden werden. Die Vorrichtung kann beispielsweise eine Wegbeschränkung für die Objekte darstellen. Die Vorrichtung kann als Werkzeug oder Hilfsmittel verstanden werden, um die Barriere auf einem Rollendeck zu erhalten.

Das Rollendeck weist eine Ladefläche auf. Die Ladefläche ist regelmäßig aus Metallblech gebildet, beispielsweise aus gelochtem Metallblech und/oder gelochten Metallblechsegmenten. Mehrere der Metallblechsegmente können zur Ladefläche zusammengesetzt sein bzw. die Ladefläche bilden. Die Ladefläche erstreckt sich insbesondere zumindest im Wesentlichen in einer Ebene, insbesondere welcher Ebene die Rollenelemente hervorstehen. Die Ladefläche kann von einer Basisstruktur des Rollendecks gehalten bzw. gestützt sein. An der Basisstruktur können die Rollenelemente befestigt sein. Die Basisstruktur befindet sich regelmäßig unterhalb von der Ladefläche und/oder den Rollenelementen.

Die Ladefläche ist mit den Öffnungen versehen bzw. weist die Öffnungen auf, insbesondere mindestens zehn oder mindestens fünfzig oder mehr Öffnungen. Die Öffnungen sind beispielsweise rund geformt und/oder in einer durch die Ladefläche gebildeten Ebene verteilt. Die Öffnungen sind beispielsweise durch eine Umrandung bzw. Kontur gebildet bzw. ausgeformt. Die Öffnungen bzw. Umrandungen sind beispielsweise in die Ladefläche eingearbeitet, insbesondere eingeschnitten und/oder eingestanzt. Ferner sind die Rollenelemente vorgesehen, die zur Auflage von den Objekten aus den Öffnungen hervorstehen bzw. abschnittsweise aus den Öffnungen herausragen, insbesondere um einzelne Kontaktpunkte für die Objekte zu bilden, die vorzugsweise an den Objekten abrollbar ausgebildet sind.

Die Öffnungen bzw. deren Umrandungen sind jeweils von einem Bereich umgeben. Die Ladefläche neben einer jeweiligen Öffnung kann diese Öffnung unmittelbar umgeben und dort den genannten Bereich (insbesondere den "die Öffnung umgebenden Bereich der Ladefläche") ausformen, auf dem sich die Vorrichtung abstützen kann bzw. darauf aufliegen kann. Beispielsweise ist der Bereich ringförmig und/oder erstreckt sich flächig.

Beispielsweise handelt es sich bei den Rollenelementen um Transportrollen und/oder Lenkrollen. Die Rollenelemente weisen regelmäßig zwei Drehachsen bzw. Rotationsachsen auf, um welche Drehachsen sich Komponenten des Rollenelements zueinander drehen können. Die Hochachse kann zumindest im Wesentlichen senkrecht zur Ladefläche bzw. zu deren Ebene verlaufen. Die Horizontalachse kann zumindest im Wesentlichen senkrecht zur Hochachse und/oder zumindest im Wesentlichen parallel zur Ladefläche verlaufen. Die Horizontalachse kann unterhalb von, im Wesentlichen in der oder oberhalb von der durch die Ladefläche gebildeten Ebene verlaufen.

Vorzugsweise weist das Rollenelement ein Basisteil, ein Schwenkteil und/oder eine Rolle auf. Das Basisteil kann in der Öffnung der Ladefläche bzw. an einer/der Basisstruktur des Rollendecks befestigt werden bzw. ist dort befestigt. Das Schwenkteil ist vorzugsweise um die Hochachse drehbar am Basisteil gehalten, insbesondere mittels eines Wälzlagers. Die Rolle ist vorzugsweise um die Horizontalachse drehbar im Schwenkteil gehalten, insbesondere mittels eines Wälzlagers. Dabei ist es bevorzugt, dass das Schwenkteil eine Beabstandung von Hochachse und Horizontalachse bereitstellt. Das Schwenkteil kann einen sich zumindest im Wesentlichen flächig erstreckenden Zehenschutz aufweisen, der zumindest im Wesentlichen in der Ebene der Ladefläche anzuordnen bzw. angeordnet ist. Der Zehenschutz kann eine in der Horizontalachse liegende und/oder parallel dazu verlaufende Fläche ausbilden. Der Zehenschutz kann einen oder mehrere Rücksprünge aufweisen, um längs der Hochachse in die Öffnung und/oder zum Basisteil Zugriff zu erhalten. Der oder die Rücksprünge sind vorzugsweise randseitig an dem Zehenschutz angeordnet, beispielsweise angrenzend an die Umrandung der Öffnung. Der Zehenschutz kann zumindest im Wesentlichen rund und/oder zur Öffnung korrespondierend ausgeformt sein, insbesondere kleiner als die Öffnung ausgeformt sein.

Die Rollenelemente ragen vorzugsweise derart aus den Öffnungen hervor, dass alle Oberseiten der Rollenelemente zumindest im Wesentlichen in einer gemeinsamen Ebene und/oder auf gleicher Höhe liegen, vorzugsweise oberhalb von der Ladefläche. Auf der Ladefläche, insbesondere auf den Rollenelementen, können Objekte platziert werden. Die Objekte können auf einem oder mehreren der Rollenelemente im Wesentlichen punktuell aufliegen. Die Objekte können durch Abrollen an dem oder den Rollenelementen reibungsarm verschoben werden.

Die Rollenelemente sind jeweils um eine Hochachse und um eine Horizontalachse drehbar angeordnet. Hochachse soll dabei andeuten, dass die Achse regelmäßig hoch, nach oben bzw. vertikal zeigend ausgerichtet sein kann. Horizontalachse soll dabei bedeuten, dass die Achse regelmäßig horizontal verlaufend bzw. waagerecht ausgerichtet sein kann. Die Hochachse kann auch als eine erste Achse und die Horizontalachse als eine zweite Achse verstanden bzw. bezeichnet werden.

Es sind zumindest zwei Sicherungseinrichtungen vorgesehen. Insoweit können im Wesentlichen baugleiche Sicherungseinrichtungen vorgesehen sein. Vorzugsweise ist jede Sicherungseinrichtung passend zu einer Öffnung ausgebildet, so dass die zumindest zwei Sicherungseinrichtungen beispielsweise in zwei Öffnungen eingesteckt bzw. eingesetzt werden können.

Der Einfachheit halber ist vorliegend insbesondere von "der Sicherungseinrichtung" oder "den Sicherungseinrichtungen" die Rede, wobei das Geschriebene sich auf eine, mehrere oder alle der in der jeweiligen Vorrichtung enthaltenen Sicherungseinrichtungen beziehen kann, insbesondere also auf "die zumindest zwei Sicherungseinrichtungen".

Die Sicherungseinrichtungen weisen jeweils einen Einsteckabschnitt zum Einstecken auf. Der Einsteckabschnitt kann beispielsweise einen Vorsprung aufweisen, der zu einem Rücksprung, zur Öffnung und/oder zum Rollenelement korrespondieren kann. Es können auch mehrere Vorsprünge, beispielsweise zwei oder mehr, vorgesehen sein. Der Einsteckabschnitt kann eingesteckt werden, insbesondere um einen Formschluss zwischen Sicherungseinrichtung und Rollendeck längs der Ladefläche bereitzustellen.

Die Sicherungseinrichtungen weisen jeweils einen Auflageabschnitt zur Auflage auf der Ladefläche auf, insbesondere zur Auflage auf einem/dem die Öffnung umgebenden Bereich der Ladefläche. Der Auflageabschnitt kann durch einen oder mehrere flächige Abschnitte und/oder durch einen oder mehrere Vorsprünge gebildet sein. Der Auflageabschnitt kann sich zumindest in einer Ebene erstrecken. Beispielsweise ist der Auflageabschnitt größer als die Öffnung, um in unmittelbarer Umgebung der Öffnung auf der Ladefläche aufliegen zu können. Der Auflageabschnitt kann zur zumindest abschnittsweise umlaufenden Auflage auf dem die Öffnung umgebenden Bereich der Ladefläche ausgebildet sein.

Die Sicherungseinrichtung kann einen Umlenkungsabschnitt aufweisen. Der Umlenkungsabschnitt kann angrenzend an den Auflageabschnitt angeordnet sein. Der Umlenkungsabschnitt kann eine Schräge aufweisen, die oberhalb und/oder gegenüberliegend bzw. abgewandt von dem Auflageabschnitt und/oder von der Öffnung des Rollendecks angeordnet sein kann. Der Umlenkungsabschnitt bzw. die Schräge kann eine von der Ladefläche ausgehende Rampe bilden. Beispielsweise kann der Umlenkungsabschnitt umlaufend in Bezug auf den Auflageabschnitt angeordnet sein. Eine in die Vorrichtung längs der Ladefläche eingeleitete Kraft kann mittels des Umlenkungsabschnitts beispielsweise nach oben bzw. in vertikale Richtung umgelenkt werden und z.B. zu einem bevorzugt ein flexibles Element aufweisenden Anschlagabschnitt umgelenkt werden.

Die Verbindungseinrichtung ist zum Bereitstellen einer mechanischen Verbindung zwischen zwei Sicherungseinrichtungen der zumindest zwei Sicherungseinrichtungen ausgebildet bzw. vorgesehen. Ergänzend können die jeweiligen Sicherungseinrichtungen passend ausgebildet sein. Damit ist beispielsweise gemeint, dass die Verbindungseinrichtung eine Möglichkeit bereitstellt, die Sicherungseinrichtungen relativ zueinander zu fixieren und/oder aneinander festzulegen, insbesondere in zumindest einer, in mehreren oder in allen Richtungen. Die Verbindungseinrichtung kann eine Kraftübertragung zwischen den Sicherungseinrichtungen ermöglichen. Beispielsweise kann die Verbindungseinrichtung als Stab ausgebildet sein, der ein Drehmoment und/oder eine Längskraft, insbesondere Zugkraft und/oder Druckkraft, und/oder eine Querkraft übertragen kann. Die Verbindungseinrichtung ist vorzugsweise wenigstens abschnittsweise oder vollständig starr ausgebildet. Die Verbindungseinrichtung kann an den Sicherungseinrichtungen festgelegt bzw. befestigt werden. Beispielsweise weist die Verbindungseinrichtung und/oder die Sicherungseinrichtung hierzu Befestigungsmittel auf.

Der Einsteckabschnitt kann im Bereich des Auflageabschnitts einen, vorzugsweise zwei im Wesentlichen parallel orientierte, Zapfen bzw. Vorsprünge zum Eingriff in eine der Öffnungen aufweisen. Beispielsweise weist der Einsteckabschnitt zwei gleichartige Zapfen auf. Die Zapfen können langgestreckt ausgebildet sein. Im eingesteckten Zustand können sich die Zapfen im Wesentlichen parallel zur Hochachse erstrecken. Die Zapfen können beispielsweise in die Öffnungen, insbesondere angrenzend an das jeweilige Rollenelement und/oder eingreifend in das jeweilige Rollenelement, eingreifen, um längs der Ladefläche einen Formschluss bereitzustellen. Beispielsweise können die Zapfen in einen Zehenschutz des jeweiligen Rollenelements, insbesondere Rücksprünge im Zehenschutz, eingreifen. Der Einsteckabschnitt kann an den Auflageabschnitt angrenzen und/oder zumindest teilweise davon gebildet sein.

Zwei der Zapfen können an einer Sicherungseinrichtung, an beiden Sicherungseinrichtungen oder an allen Sicherungseinrichtungen der zumindest zwei Sicherungseinrichtungen vorgesehen sein. Ein Abstand zwischen den Zapfen kann einstellbar sein. Beispielsweise kann ein Abschnitt der Verbindungseinrichtung, beispielsweise der Auflageabschnitt, eine Verstellmechanik für den Einsteckabschnitt aufweisen, insbesondere für die Zapfen. So können die Zapfen unter einstellbarem Abstand zueinander auf verschiedene Rollendecks angepasst werden. Es ist auch möglich, dass die Zapfen an verschiedenen Stellen des Einsteckabschnitts und/oder des Auflageabschnitts befestigt, beispielsweise verschraubt, werden können, um den Abstand zwischen den Zapfen einstellen zu können.

Der Auflageabschnitt kann, insbesondere unterseitig, eine schräge und/oder konkave Form aufweisen, um zum Rollenelement eine Beabstandung bereitzustellen bzw. nicht oder nicht vollständig darauf aufzuliegen.

Der Auflageabschnitt kann mit einer Beschichtung versehen sein, beispielsweise einem rutschfesten Belag und/oder einer Gummierung. So kann die Sicherungseinrichtung verbessert an dem Rollendeck haften.

Die zumindest zwei Sicherungseinrichtungen können jeweils einen Anschlagabschnitt, insbesondere mit einem flexiblen Element, zum Anschlagen der Objekte aufweisen. Der Anschlagabschnitt kann an den Auflageabschnitt angrenzen. Der Anschlagabschnitt kann eine Öffnung aufweisen, beispielsweise in der das flexible Element angeordnet ist. Das flexible Element kann ein elastisches Material aufweisen, beispielsweise Gummi. Das flexible Element kann den Auflageabschnitt seitlich überragen, so dass Objekte daran möglichst schadlos anstoßen können. Beispielsweise kann der Anschlagabschnitt in radialer Richtung bzw. im in das Rollendeck eingestecktem Zustand quer zur Hochachse einen am weitesten vorstehenden Abschnitt einer Sicherungseinrichtung bereitstellen.

Der Anschlagabschnitt, insbesondere das flexible Element, kann eine Feder, beispielsweise Spiralfeder, insbesondere metallische Feder, aufweisen. Der Anschlagabschnitt und/oder die Feder kann in den Auflageabschnitt und/oder den Umlenkungsabschnitt integriert und/oder daran befestigt sein. Die Feder kann mit Gummi oder anderen flexiblen Materialien ummantelt sein bzw. darin eingearbeitet sein. Der Anschlagabschnitt, insbesondere das flexible Element und/oder die Feder, kann hergestellt sein aus Kautschuk, insbesondere Chloropren-Kautschuk bzw. CR oder ähnlichem bzw. dieses aufweisen.

Die zumindest zwei Sicherungseinrichtungen können einen Aufnahmeabschnitt zur Aufnahme der Verbindungseinrichtung aufweisen. Der Aufnahmeabschnitt kann an den Anschlagabschnitt angrenzen. Beispielsweise kann sich der Aufnahmeabschnitt gegenüberliegend vom Auflageabschnitt und/oder vom Einsteckabschnitt befinden. Der Aufnahmeabschnitt kann eine Führung und/oder Aufnahme für die Verbindungseinrichtung aufweisen. Die Verbindungseinrichtung kann in den Aufnahmeabschnitt eingesetzt, eingesteckt und/oder eingeschoben werden.

Der Aufnahmeabschnitt ist beispielsweise eingerichtet, die Verbindungseinrichtung lösbar und/oder verstellbar zu führen. Beispielsweise kann die Verbindungseinrichtung im Aufnahmeabschnitt verstellt bzw. verschoben werden, um einen Abstand zwischen den zwei mit der Verbindungseinrichtung verbundenen Sicherungseinrichtungen einzustellen. Der Aufnahmeabschnitt kann eingerichtet sein, zwei oder mehr Verbindungseinrichtungen aufzunehmen.

Der Aufnahmeabschnitt kann ein Fixiermittel zum Fixieren der Verbindungseinrichtung(en) in der Führung bzw. Aufnahme aufweisen. Beispielsweise kann das Fixiermittel eine Schraube, einen Splint, einen Sicherungsstift, einen Stift oder dergleichen aufweisen bzw. als ein solcher ausgebildet sein und/oder einen lösbaren Formschluss zwischen der Aufnahme des Aufnahmeabschnitts und der Verbindungseinrichtung bereitstellen.

Die Verbindungseinrichtung kann langgestreckt sein und/oder eine Stange aufweisen. Die Verbindungseinrichtung ist insbesondere mindestens 20 cm, vorzugsweise mindestens 30 cm oder mindestens 40 cm lang und/oder in der Länge einstellbar. Insbesondere ist die Verbindungseinrichtung teleskopierbar ausgeführt. Eine Teleskopierbarkeit kann beispielsweise durch ineinander gesteckte Rohre oder dergleichen bereitgestellt werden. In langgestreckter Form bzw. als Stange kann die Verbindungseinrichtung einfach und intuitiv vom jeweiligen Aufnahmeabschnitt aufgenommen werden. Es ist möglich, die Vorrichtung damit sehr kompakt und gleichwohl als wirksame Barriere auszubilden. Die Teleskopierbarkeit lässt es auch zu, eine Dämpfungsfunktion zu integrieren.

Es können drei oder mehr der zumindest zwei Sicherungseinrichtungen und/oder zwei, drei oder mehr von der Verbindungseinrichtung vorgesehen sein, insbesondere um in einer Reihe und/oder um dreiecksförmig miteinander verbunden werden zu können, und/oder um in mehrere, insbesondere drei oder mehr, der Öffnungen des Rollendecks eingesteckt zu werden. Insoweit können bei einer Sicherungseinrichtung zwei Verbindungseinrichtungen aufgenommen und ggf. fixiert werden, um eine Reihe oder ein Dreieck mit den Verbindungseinrichtungen aufzuspannen, und beispielsweise um an den Eckpunkten bzw. Knicken/Ecken des Dreiecks oder der Reihe die Sicherungseinrichtungen aufzuweisen. Die Eckpunkte bzw. Knicke/Ecken können dann im Bereich von Öffnungen des Rollendecks platziert werden und dort eingesteckt werden. Beispielsweise kann die Vorrichtung dreiecksförmig auf dem Rollendeck platziert werden, um eine von mehreren Richtungen stabile Barriere bereitzustellen, und um eine verbesserte Sichtbarkeit zu schaffen. Es ist auch möglich, eine Mehrzahl von Sicherungseinrichtungen in einer Reihe anzuordnen, und diese miteinander mittels Verbindungseinrichtungen zu verbinden. So kann eine langgestreckte Barriere auf dem Rollendeck bereitgestellt werden.

Vorgeschlagen wird weiter eine Verwendung einer oder der Vorrichtung zum Bereitstellen von einer Barriere für auf einem/dem Rollendeck bzw. Castordeck aufliegende Objekte, insbesondere wobei das Rollendeck eine mit Öffnungen versehene Ladefläche aufweist, wobei aus den Öffnungen Rollenelemente zur Auflage von den Objekten hervorstehen, wobei die Rollenelemente jeweils um eine Hochachse und um eine Horizontalachse drehbar angeordnet sind, und/oder wobei die Vorrichtung in zwei der Öffnungen eingesteckt ist oder wird. Es ist möglich, dass das Rollendeck an einem Flughafen oder einem Logistik-Hub vorgesehen ist. Mit dieser Verwendung wird die Vereinfachung des Betriebsablaufs an dem Rollendeck ermöglicht.

Vorgeschlagen wird weiter ein System mit einem/dem Rollendeck und mit einer Vorrichtung zum Bereitstellen von einer Barriere für auf dem Rollendeck aufliegende Objekte, wobei das Rollendeck eine mit Öffnungen versehene Ladefläche aufweist, wobei aus den Öffnungen Rollenelemente zur Auflage von den Objekten hervorstehen, und/oder wobei die Rollenelemente jeweils um eine Hochachse und um eine Horizontalachse drehbar angeordnet sind. Die Vorrichtung ist insbesondere die vorliegend beschriebene Vorrichtung. Das System kann als ganzheitliche Lösung dienen, um Objekte vereinfacht transportieren zu können, und um diese auf dem Rollendeck auch vereinfacht fixieren zu können.

Im Rahmen der Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" und "oder" können stets mit "und/oder" ersetzt werden.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: ein System mit zwei in ein Rollendeck eingesteckten Vorrichtungen zum Bereitstellen von Barrieren, wobei auf dem Rollendeck Objekte angeordnet sind, in perspektivischer Ansicht,
- Fig 2A-C: ein Rollendeck, z.B. das der Fig. 1, in einer Gesamtansicht (A), in einer Detailansicht auf ein in einer Öffnung des Rollendecks angeordnetes Rollenelement (B) und mit Blick auf nur ein Rollenelement (C),
- Fig. 3: eine Vorrichtung zum Bereitstellen von einer Barriere und mit zumindest zwei Sicherungseinrichtungen und einer die Sicherungseinrichtungen verbindenden Verbindungseinrichtung oberhalb von einem Rollendeck in einer schematischen Ansicht, und
- Fig. 4: eine Vorrichtung zum Bereitstellen von einer Barriere, die in ein Rollendeck eingesteckt ist, in perspektivischer Ansicht.

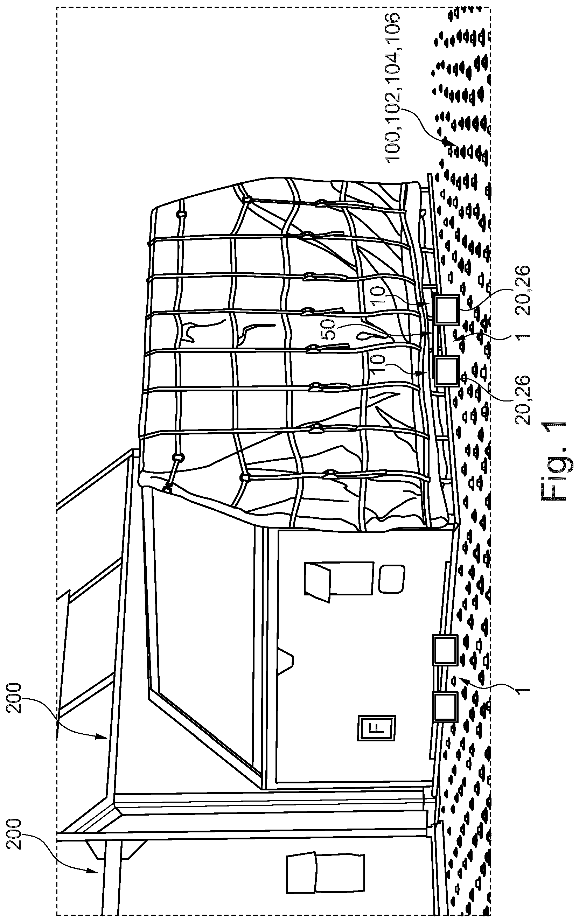

Fig. 1 zeigt ein System mit zwei Vorrichtungen 1 zum Bereitstellen von einer Barriere für auf einem Rollendeck 100 aufliegende Objekte 200 und mit dem Rollendeck 100. Die Objekte 200 sind ULD-Container. Das Rollendeck 100 weist eine mit einer Vielzahl von Öffnungen 104 versehene Ladefläche 102 auf, wobei aus jeder der Öffnungen 104 Rollenelemente 106 zur Auflage von den Objekten 200 hervorstehen. Die ULD-Container sind auf den Rollenelementen 106 reibungsarm verschiebbar, indem die ULD-Container auf den Rollenelementen 106 aufliegen und die ortsfesten Rollenelemente 106 über punktuellem Kontakt an den ULD-Containern abrollen können. Vorliegend bilden die Vorrichtungen 1 an zwei Seiten eines Objekts 200 die Barrieren aus, damit ein Verschieben des Objekts 200 wahlweise blockiert werden kann.

Die Vorrichtungen 1 weisen jeweils zwei Sicherungseinrichtungen 10 auf, die einen Einsteckabschnitt 20 zum Einstecken in eine der Öffnungen 104 und einen Auflageabschnitt 26 zur Auflage auf einem die Öffnung umgebenden Bereich der Ladefläche 102 auf. Ferner weist jede Vorrichtung 1 eine Verbindungseinrichtung 50 auf, die zwischen den jeweiligen zwei Sicherungseinrichtungen 10 eine mechanische Verbindung bereitstellt. Die Objekte 200 können an den Sicherungseinrichtungen 10 in Richtungen längs des Rollendecks 100 anschlagen.

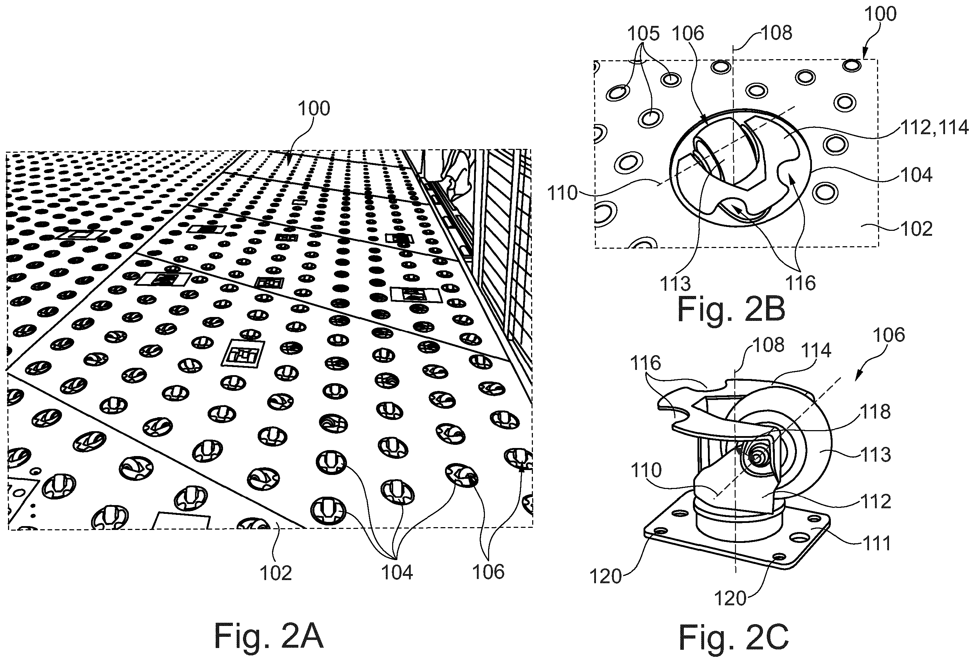

Mit Blick auf Fig. 2A-B ist ein Rollendeck 100, beispielsweise das der Fig. 1, detaillierter gezeigt. Das Rollendeck 100 weist eine Vielzahl an regelmäßig längs der Ladefläche 102 verteilte Öffnungen 104 auf. Beispielsweise sind die Öffnungen 104 in Reihen angeordnet. Die Öffnungen 104 sind vorliegend rund bzw. kreisrund geformt und weisen eine runde Umrandung auf.

Das Rollendeck 100 weist die Rollenelemente 106 auf, die in jeder der Öffnungen 104 angeordnet sind und aus den Öffnungen 104 hervorstehen bzw. herausragen. Die Rollenelemente 106 bilden Kontaktpunkte für die Objekte 200, damit die Objekte 200 darauf aufliegen können und die Rollenelemente 106 an den Objekten 200 abrollen können. Die Kontaktpunkte liegen hierzu im Wesentlichen in einer gemeinsamen Ebene.

Das Rollendeck 100 weist im Übrigen weitere Öffnungen 105 bzw. Ausnehmungen auf, die kleiner als die Öffnungen 104 sind. Ein Rand der weiteren Öffnungen 105 steht von der durch die Ladefläche 102 gebildeten Ebene insbesondere ringförmig vor. Die weiteren Öffnungen 105 sind im Wesentlichen als Profilierung vorgesehen, um beim Darüberlaufen besseren Halt zu geben. Die weiteren Öffnungen 105 sind längs der Ladefläche 102 verteilt zwischen den Öffnungen 104 vorgesehen.

Die Ladefläche 102 ist vorliegend aus gelochten Metallblechsegmenten gebildet. Die Metallblechsegmente sind viereckig, insbesondere trapezförmig. Die Metallblechsegmente weisen exemplarisch zwischen zehn und fünfzig der Öffnungen 104 und optional eine Vielzahl an weiteren Öffnungen 105 auf. Die Metallblechsegmente sind vorliegend an einer darunterliegenden Basisstruktur des Rollendecks 100 festgelegt.

Die Rollenelemente 106 sind jeweils um eine Hochachse 108 und um eine Horizontalachse 110 drehbar angeordnet, vgl. Fig. 2B. In Fig. 2C ist ferner ein einzelnes der Rollenelemente 106 gezeigt. Das Rollenelement 106 weist ein Basisteil 111, ein um die Hochachse 108 drehbar am Basisteil 111 gelagertes Schwenkteil 112, und eine drehbar im Schwenkteil 112 gelagerte Rolle 113 auf.

Das Basisteil 110 und das Schwenkteil 112 sind aus Metall, insbesondere Stahl, vorzugsweise verzinktem Stahl, hergestellt, um langlebig ausgebildet zu sein. Die Rolle 113 ist vorzugsweise aus einem Nichtmetallwerkstoff, beispielsweise Kunststoff, hergestellt, um Objekte 200 möglichst nicht zu beschädigen oder zu verkratzen.

Zwischen Basisteil 110 und Schwenkteil 112 und zwischen Schwenkteil und Rolle 113 sind jeweils vorzugsweise Wälzlager vorgesehen.

Das Schwenkteil 112 bildet einen sich flächig erstreckenden Zehenschutz 114 mit zwei Rücksprüngen 116 aus. Die Rücksprünge 116 sind am Rand des Zehenschutzes 114 vorgesehen, um an die Umrandung einer Öffnung 104 anzugrenzen bzw. dieser in Richtung längs der Ladefläche 102 gegenüber zu liegen. Der Zehenschutz 114 weist einen im wesentlichen rund geformten Rand auf bzw. ist rund geformt. Der Zehenschutz 114 korrespondiert zur Öffnung 114, ist insbesondere kleiner als die Öffnung 114 um frei drehen zu können.

Der Zehenschutz 114 liegt im Wesentlichen in der durch die Ladefläche 102 gebildeten Ebene bzw. fluchtet damit. Demgegenüber steht die Rolle 113 von der Ebene bzw. vom Zehenschutz 114 vor. Die Horizontalachse 110 liegt vorliegend abseits, insbesondere unterhalb, von der Ebene und verläuft vorliegend zumindest im Wesentlichen parallel zu dieser.

Die Hochachse 108 und die Horizontalachse 110 verlaufen senkrecht zueinander und bilden einen Abstand 118 zueinander aus. Aufliegende Objekte 200 können so in beliebige Richtungen längs der Ladefläche 102 verschoben werden und das Rollenelement 106 dreht sich mit geringem Widerstand derart um die Hochachse 108, dass die Rolle 113 sich entsprechend der Bewegungsrichtung des jeweiligen Objekts 200 widerstandsarm um die Horizontalachse 110 drehen kann. Anders gesagt dreht sich das Rollenelement 106 mit einem Objekt 200 und in Abhängigkeit von der Bewegungsrichtung des Objekts 200.

Das Basisteil 111 ist mittels Montageöffnungen 120 in der Basisstruktur des Rollendecks 100 zu befestigen bzw. befestigt, beispielsweise verschraubbar bzw. verschraubt. Durch die Rücksprünge 116 kann ein Zugang zu den Montageöffnungen 120 längs der Hochachse 108 erfolgen, wenn das Rollenelement 106 in der Öffnung 104 angeordnet ist. Beispielsweise kann ein Werkzeug wie ein Schraubenzieher durch die Rücksprünge 116 in das Rollendeck 100 eingesteckt werden. Zudem kann auch ein Einsteckabschnitt einer Vorrichtung in die Rücksprünge 116 eingesteckt werden.

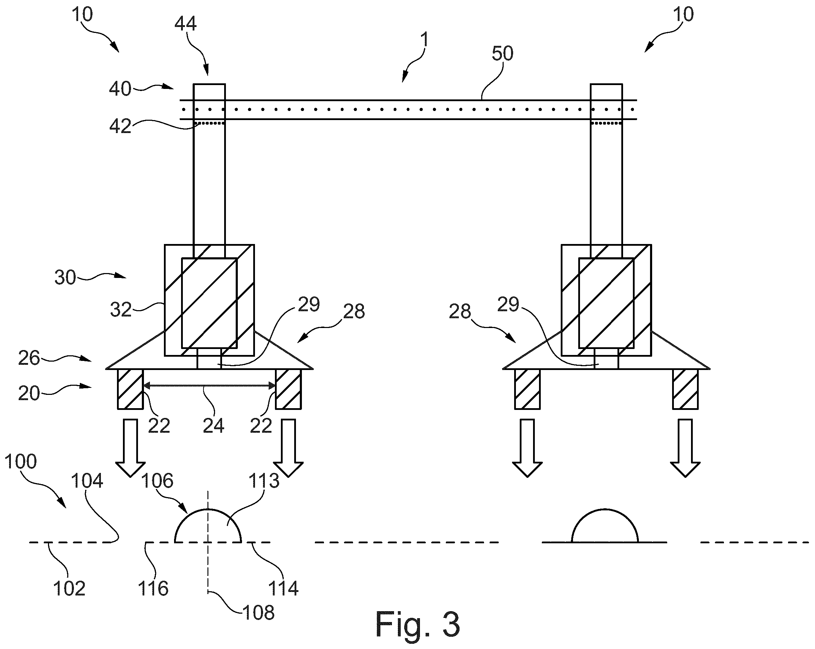

Fig. 3 zeigt eine der in Fig. 1 gezeigten Vorrichtungen 1 und oberhalb von einem Rollendeck 100 in schematischer Ansicht.

Die Vorrichtung 1 weist den Einsteckabschnitt 20 auf, der zwei Zapfen 22 umfasst. Die Zapfen 24 bilden zueinander bzw. zwischeneinander einen einstellbaren Abstand 24 aus. Der Abstand 24 entspricht bzw. korrespondiert zu dem Abstand der Rücksprünge 116 bei den Rollenelementen 106. So können die Zapfen 24 in die Rücksprünge 116 in einer der Öffnungen 104 eingreifen. Die Zapfen 24 sind im Bereich des Auflageabschnitts 26 angeordnet und sind parallel orientiert bzw. erstrecken sich parallel.

Der Auflageabschnitt 26 eine schräge oder konkave Form aufweisen, um das Rollenelement 106 bereichsweise aufzunehmen und um nicht oder nicht vollständig bzw. großflächig darauf aufzuliegen. Diese schräge oder konkave Form ist unterseitig an der Sicherungseinrichtung 10 vorgesehen.

Der Auflageabschnitt 26 ist mit einem rutschfesten Belag bzw. einer Gummierung versehen, um an der Ladefläche 102 gut zu haften.

Angrenzend an den bzw. oberhalb vom Auflageabschnitt 26 befindet sich ein Umlenkungsabschnitt 28 in Form einer Schräge, die eine von der Ladefläche 102 ausgehende Rampe bildet. Die Rampe ist umlaufend ausgebildet. Objekte können an der Rampe auflaufen und Kräfte können so nach oben umgelenkt werden, insbesondere um an einen Anschlagabschnitt 30 anzuschlagen.

Oberhalb von dem Auflageabschnitt 26 befindet sich der Anschlagabschnitt 30 mit einer Öffnung bzw. einer Aufnahme, in der ein flexibles Element 32 angeordnet ist. Das flexible Element 32 kann an den Objekten 200 anschlagen bzw. die Objekte 200 können daran anschlagen.

Das flexible Element 32 weist eine metallische Feder auf, die von Gummi ummantelt ist.

Der Anschlagabschnitt 30, insbesondere das flexible Element 32, ist über ein Gelenk 29 beweglich mit dem Auflageabschnitt 26 verbunden. Beispielsweise kann das Gelenk 29 ein Kugelgelenk sein.

Angrenzend an den Anschlagabschnitt 30 befindet sich ein Aufnahmeabschnitt 40 zur Aufnahme der Verbindungseinrichtung 50. Der Aufnahmeabschnitt 40 weist eine Aufnahme 42 auf und ist eingerichtet, die Verbindungseinrichtung 40 verstellbar zu führen. Ferner ist ein Fixiermittel 44 in Form eines Splints oder Sicherungsstifts vorgesehen, das einen lösbaren Formschluss 42 zwischen Aufnahme und Verbindungseinrichtung 40 bereitstellen kann.

Die Verbindungseinrichtung 50 weist eine Stange auf und ist langgestreckt. Insbesondere ist die Verbindungseinrichtung teleskopierbar ausgeführt, um einen Abstand zwischen den jeweiligen zwei Sicherungseinrichtungen 10 einzustellen. Der Abstand kann alternativ oder ergänzend an der Aufnahme 42 eingestellt werden, indem das Fixiermittel 44 an verschiedenen Stellen längs der Verbindungseinrichtung und in der Aufnahme 42 angebracht wird.

Das Rollendeck 100 entspricht im Wesentlichen dem in Fig. 1 bzw. Fig. 2A-B gezeigten Rollendeck 100. Vorliegend sind in einer schematischen Seitenansicht zwei der Öffnungen 104 in der Ladefläche 102 mit jeweils einem darin angeordneten Rollenelement 106 gezeigt. Ersichtlich steht das Rollenelement 106 mit seiner Rolle 113 abschnittsweise aus der Öffnung 104 hervor. Ein Zehenschutz 114 des Rollenelements 106 weist Rücksprünge 116 auf, die der Umrandung der Öffnung 104 gegenüberliegen. In die Öffnungen 104 und mithin in die Rücksprünge 116 können die Zapfen 22 eingesteckt werden, um längs der Ladefläche 102 einen Formschluss hervorzurufen.

Die Vorrichtung 1 ist in einem Zustand oberhalb von dem Rollendeck 100 gezeigt, in dem sie in Öffnungen 104 des Rollendecks 100 eingesteckt werden kann, insbesondere in Richtung parallel zu Hochachsen 108 von Rollenelementen 106 des Rollendecks 100. Hierzu sind vier Pfeile eingezeichnet, die von den Zapfen 22 ausgehend zum Rollendeck 100 weisen.

Wenn die Vorrichtung 1 in das Rollendeck 100 eingesteckt ist, kann der Einsteckabschnitt 20 zumindest abschnittsweise von den Rollenelementen 106 und/oder von der Öffnung 104 aufgenommen werden und optional können die Rollenelemente 106 zumindest abschnittsweise von der Vorrichtung 1 aufgenommen werden.

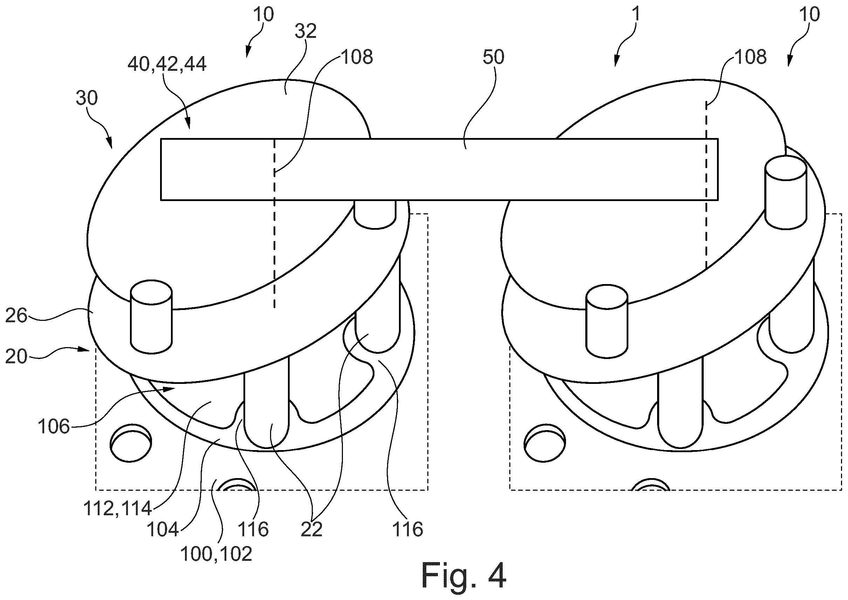

Fig. 4 zeigt eine weitere Ausführungsform einer Vorrichtung 1 zum Bereitstellen einer Barriere bei einem Rollendeck 100. Die Vorrichtung 1 ist in Öffnungen 104 des Rollendecks 100 eingesteckt.

Das Rollendeck 100 weist eine Ladefläche 102 aus Metallblechsegmenten mit den Öffnungen 104 auf. Aus den Öffnungen 104 stehen Rollenelemente 106 abschnittsweise hervor. Ein in der Ansicht der Fig. 4 verdecktes Basisteil eines jeweiligen Rollenelements 106 ist an einer Basisstruktur des Rollendecks 100 festgelegt. Die Ladefläche 102 ist ebenfalls an der Basisstruktur festgelegt. Ein zum Basisteil um eine Hochachse 108 schwenkbares Schwenkteil 112 trägt eine um eine Horizontalachse drehbare Rolle. Die Rollen der Rollenelemente 106 sind in dieser Ansicht von der Vorrichtung 1 abgedeckt. Das Schwenkteil 112 formt ferner einen flächigen Zehenschutz 114 mit zwei Rücksprüngen 116 aus.

Die Vorrichtung 1 ist mittels zumindest zwei Sicherungseinrichtungen 10 in die zwei dargestellten Öffnungen 104 der Ladefläche 102 des Rollendecks 100 eingesteckt. Genauer gesagt sind zwei Sicherungseinrichtungen 10 der Vorrichtung 1 jeweils in eine der Öffnungen 104 eingesteckt. Eine Verbindungseinrichtung 50 in Form einer teleskopierbaren Stange verbindet die zwei Sicherungseinrichtungen 10 der zumindest zwei Sicherungseinrichtungen 10 mechanisch.

Die zumindest zwei Sicherungseinrichtungen 10 weisen Einsteckabschnitte 20 mit zwei parallelen Zapfen 22 auf, die in die Rücksprünge 116 des Zehenschutzes 114 des jeweiligen Rollenelements 106 und mithin in die Öffnungen 104 eingreifen bzw. eingesteckt sind.

An die Einsteckabschnitte 20 grenzt jeweils ein Auflageabschnitt 26 an, der im die Öffnung 104 umgebenden Bereich des Rollendecks 100 aufliegt. Oberhalb von den Auflageabschnitten 26 befindet sich jeweils ein Anschlagabschnitt 30 mit einem flexiblen Element 32, an das Objekte 200 anschlagen können.

Ferner weisen die zumindest zwei Sicherungseinrichtungen 10 einen Aufnahmeabschnitt 40 mit einer Aufnahme 42 zur Aufnahme der Verbindungseinrichtung 50 auf. Ein Fixiermittel 44 wie ein Splint oder ein Stift sorgt dafür, dass die Verbindungseinrichtung 50 in der Aufnahme 42 lösbar fixiert werden kann.

Die vorbeschriebenen Vorrichtungen 1 können erweitert werden. Beispielsweise können drei oder mehr der zumindest zwei Sicherungseinrichtungen 10 und zwei oder mehr Verbindungseinrichtungen 50 vorgesehen sein, die in einer Reihe oder die dreiecksförmig miteinander verbunden werden können, um in drei oder mehr Öffnungen 104 eines Rollendecks 100 eingesteckt zu werden.

Es ist insbesondere möglich, dass ein jeweiliger Aufnahmeabschnitt 40 mehr als eine Verbindungseinrichtung 50 aufnehmen kann, beispielsweise zwei Verbindungseinrichtungen 50 aufnehmen kann. Die aufgenommenen Verbindungseinrichtungen 50 können jeweils in verschiedene Richtungen weisen, beispielsweise um die Reihe oder das Dreieck auszubilden.

Dargestellt und beschrieben ist eine Verwendung einer Vorrichtung 1 zum Bereitstellen von einer Barriere für auf einem Rollendeck 100 aufliegende Objekte 200, wobei die Vorrichtung 1 in zwei Öffnungen 104 des Rollendecks 100 eingesteckt ist oder wird. Das Rollendeck 100 ist an einem Flughafen oder einem Logistik-Hub vorgesehen.

### Bezugszeichenliste

- 1: Vorrichtung
- 10: Sicherungseinrichtung

- 20: Einsteckabschnitt
- 22: Zapfen
- 24: Abstand
- 26: Auflageabschnitt
- 28: Umlenkungsabschnitt
- 29: Gelenk

- 30: Anschlagabschnitt
- 32: flexibles Element

- 40: Aufnahmeabschnitt
- 42: Aufnahme
- 44: Fixiermittel

- 50: Verbindungseinrichtung

- 100: Rollendeck
- 102: Ladefläche
- 104: Öffnung
- 105: weitere Öffnung
- 106: Rollenelement
- 108: Hochachse
- 110: Horizontalachse
- 111: Basisteil
- 112: Schwenkteil
- 113: Rolle
- 114: Zehenschutz
- 116: Rücksprung
- 118: Abstand
- 120: Montageöffnung
- 200: Objekt

## Patentansprüche

1. Vorrichtung (1) zum Bereitstellen einer Barriere für auf einem Rollendeck (100) aufliegende Objekte (200), wobei das Rollendeck (100) eine mit Öffnungen (104) versehene Ladefläche (102) aufweist, wobei aus den Öffnungen (104) Rollenelemente (106) zur Auflage von den Objekten (200) hervorstehen, und wobei die Rollenelemente (106) jeweils um eine Hochachse (108) und um eine Horizontalachse (110) drehbar angeordnet sind, die Vorrichtung (1) aufweisend
zumindest zwei Sicherungseinrichtungen (10), die jeweils einen Einsteckabschnitt (20) zum Einstecken in eine der Öffnungen (104) des Rollendecks (100) und einen Auflageabschnitt (26) zur Auflage auf einen die Öffnung (104) umgebenden Bereich der Ladefläche (102) aufweisen, und
eine Verbindungseinrichtung (50) zum Bereitstellen einer mechanischen Verbindung zwischen zwei Sicherungseinrichtungen (10) der zumindest zwei Sicherungseinrichtungen (10).

2. Vorrichtung (1) nach dem voranstehenden Anspruch, wobei der Einsteckabschnitt (20) im Bereich des Auflageabschnitts (26) einen, vorzugsweise zwei im Wesentlichen parallel orientierte, Zapfen (22) zum Eingriff in eine der Öffnungen (104) aufweist.

3. Vorrichtung (1) nach dem voranstehenden Anspruch, wobei zwei der Zapfen (22) an einer Sicherungseinrichtung (10) der zumindest zwei Sicherungseinrichtungen (10) vorgesehen sind, und wobei ein Abstand (24) zwischen den Zapfen (22) einstellbar ist.

4. Vorrichtung (1) nach einem der voranstehenden Ansprüche, wobei die zumindest zwei Sicherungseinrichtungen (10) jeweils einen Anschlagabschnitt (30) mit einem flexiblen Element (32) zum Anschlagen der Objekte (200) aufweisen, insbesondere wobei der Anschlagabschnitt (30) an den Auflageabschnitt (26) angrenzt.

5. Vorrichtung (1) nach einem der voranstehenden Ansprüche, wobei die zumindest zwei Sicherungseinrichtungen (10) jeweils einen Aufnahmeabschnitt (40) zur Aufnahme der Verbindungseinrichtung (50) aufweisen, insbesondere wobei der Aufnahmeabschnitt (40) an den Anschlagabschnitt (30) angrenzt.

6. Vorrichtung (1) nach dem voranstehenden Anspruch, wobei der Aufnahmeabschnitt (40) eingerichtet ist, die Verbindungseinrichtung (50) verstellbar zu führen, und wobei der Aufnahmeabschnitt (40) ein Fixiermittel (44) zum Fixieren der Verbindungseinrichtung (50) in dem Aufnahmeabschnitt (40) aufweist.

7. Vorrichtung (1) nach dem voranstehenden Anspruch, wobei das Fixiermittel (44) einen Splint und/oder einen Sicherungsstift umfasst.

8. Vorrichtung (1) nach einem der voranstehenden Ansprüche, wobei die Verbindungseinrichtung (50) langgestreckt ist und/oder eine Stange aufweist.

9. Vorrichtung (1) nach einem der voranstehenden Ansprüche, wobei die Verbindungseinrichtung (50) teleskopierbar ausgeführt ist.

10. Vorrichtung (1) nach einem der voranstehenden Ansprüche, wobei drei der zumindest zwei Sicherungseinrichtungen (10) und zwei oder drei der Verbindungseinrichtung (50) vorgesehen sind, insbesondere um in einer Reihe und/oder um dreiecksförmig miteinander verbunden zu werden, und/oder um in mehrere, insbesondere drei, der Öffnungen (104) des Rollendecks (100) eingesteckt zu werden.

11. Verwendung einer Vorrichtung (1) nach einem der voranstehenden Ansprüche zum Bereitstellen der Barriere für auf dem Rollendeck (100) aufliegende Objekte (200).

12. Verwendung nach Anspruch 11, wobei das Rollendeck (100) an einem Flughafen oder einem Logistik-Hub vorgesehen ist.

13. System mit einem Rollendeck (100) und mit einer Vorrichtung (1), wobei das Rollendeck (100) eine mit Öffnungen (104) versehene Ladefläche (102) aufweist, wobei aus den Öffnungen (104) Rollenelemente (106) zur Auflage von den Objekten (200) hervorstehen, wobei die Rollenelemente (106) jeweils um eine Hochachse (108) und um eine Horizontalachse (110) drehbar angeordnet sind, wobei die Vorrichtung (1) nach einem der Ansprüche 1 bis 10 ausgebildet ist.
